# EUROPEAN PATENT APPLICATION

(11) **EP 4 556 851 A1**
(43) Date of publication of application: **21.05.2025**
(21) Application number: 24206894.8
(22) Date of filing: 16.10.2024
(51) Int. Cl.: G01C 19/5783, G01D 11/24

(54) **SENSOR BLOCK ASSEMBLY WITH ISOLATOR RIGIDLY CONNECTED TO SENSOR BLOCK**

(30) Priority: 09.11.2023 US 202363597643 P; 20.06.2024 US 202418749316
(71) Applicant: Honeywell International Inc., Charlotte, NC 28202 (US)
(72) Inventor: LEBRON, Pedro Luis, Charlotte, 28202 (US); BADILLO, Jonathan J Lopez, Charlotte, 28202 (US); PETER, Steven Edward, Charlotte, 28202 (US); BROWN, Andrew Roberts, Charlotte, 28202 (US); SAWYER, Mark Darrell, Charlotte, 28202 (US)
(74) Representative: Haseltine Lake Kempner LLP

(57) **Abstract**

A sensor block assembly includes sensor block(s) and isolator(s) rigidly connected to the sensor block(s) through adhesive, epoxy, and/or welding. A method of assembling a sensor block assembly includes: applying adhesive or epoxy onto sensor block(s) and/or isolator(s); and compressing the sensor block(s) and/or isolator(s) together with the adhesive and/or epoxy between the sensor block(s) and isolator(s), wherein the adhesive and/or epoxy forms rigid mechanical connection(s) between the sensor block(s) and isolator(s). A method of assembling a sensor block assembly includes: positioning sensor block(s) next to isolator(s); and welding the sensor block(s) to the isolator(s) to form rigid mechanical connection(s) between the sensor block(s) and isolator(s).

## Description

### CROSS-REFERENCE TO RELATED APPLICATIONS

This application claims the benefit of United States Provisional Patent Application Serial No. 63/597,643, filed on November 9, 2023 and entitled "NATURAL FREQUENCY SUPPRESSION VIA BONDING/WELDING FOR IMPROVED SENSOR PERFORMANCE", which is hereby incorporated herein by reference in its entirety.

### BACKGROUND

Micro Electronic Mechanical Systems (MEMS) can be used to create sensors and other devices.

### SUMMARY

A sensor block assembly comprises at least one sensor block and at least one isolator rigidly connected to the at least one sensor block through at least one of adhesive, epoxy, or welding. A method of assembling a sensor block assembly comprises: applying at least one of adhesive or epoxy onto at least one of at least one sensor block or at least one isolator; and compressing the at least one sensor block and the at least one isolator together with the at least one of the adhesive or the epoxy between the at least one sensor block and the at least one isolator, wherein the at least one of the adhesive or the epoxy forms at least one rigid mechanical connection between the at least one sensor block and the at least one isolator. A method of assembling a sensor block assembly comprises positioning at least one sensor block next to at least one isolator; and welding the at least one sensor block to the at least one isolator to form at least one rigid mechanical connection between the at least one sensor block and the at least one isolator.

### BRIEF DESCRIPTION OF DRAWINGS

Understanding that the drawings depict only exemplary embodiments and are not therefore to be considered limiting in scope, the exemplary embodiments will be described with additional specificity and detail through the use of the accompanying drawings, in which:
Figures 1A-1C is a block diagram illustrating an example sensor block assembly at different stages of assembly, the example sensor block assembly including an isolator rigidly connected to a sensor block for natural frequency suppression for improved sensor performance.
Figure 2 is an example method for assembling a sensor block assembly by rigidly connecting an isolator to a sensor block using adhesive and/or epoxy for natural frequency suppression for improved sensor performance.
Figure 3 is an example method for assembling a sensor block assembly by rigidly connecting an isolator to a sensor block using welding for natural frequency suppression for improved sensor performance.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

A Micro Electronic Mechanical Systems (MEMS) gyroscope is susceptible to performance degradation due to inherent imbalances of its proof mass but also due to the excitation the MEMS gyroscope's surrounding and/or mounting structure and the printed board upon which the MEMS package is attached produced by the motor drive of the gyroscope's proof mass, which in turn will couple back with the proof mass, exciting it, and producing a shift in bias performance. Said differently, a MEMS gyroscope's proof mass can get excited by its surrounding and/or mounting structure's vibration which is produced by the proof mass itself, producing a kind of self-excitation loop between the proof mass, the printed board, and the mounting structure. In theory, this problem can be resolved by fully isolating the MEMS gyroscope from external vibration environments, but this has not been possible in practice as the MEMS gyroscope cannot be productized in a free boundary condition. Another approach may be designing a mounting structure for the MEMS gyroscope Printed Board Assembly (PBA) which is designed such that there are no resonant frequencies below that of the gyroscope frequency, which may be impossible or cost inhibitive to accomplish. Additionally, when one designs an inertial sensor assembly with gyroscopes and accelerometers for the purposes of guidance and navigation, one often needs to isolate the sensor assembly from external shock and vibration, which means that typically one or more isolators need to be bolted to the sensor assembly. The introduction of this bolted joint may introduce modes that are detrimental to gyroscope performance. Techniques described herein may resolve the issue introduced by the bolted joint.

In examples, a technique mitigates or eliminates the resonant frequencies inherent from the bolted joints through the introduction of a structural epoxy (film, liquid adhesive, or otherwise) or welding of the bolted components. In examples, this allows productization to occur through affordable, manufacturable components. In examples, if the epoxy and/or weld maintains a certain stiffness through temperature and time, the bolted components respond to external vibration as if they were a single part. In this way, each component on the isolated side (such as the inside) of an isolator can be designed to avoid any significant resonant modes below the gyroscope frequency. In examples, each component can be manufactured separately and permanently bonded and/or welded upon assembly to permanently fix the components to the assembly with sufficient stiffness so as to mitigate or eliminate any modes pertaining to the bolted joint. In examples, this technique addresses potential bias performance degradation resulting from bolting the joints of two isolators to a sensor block, but may also be similarly applied to other PBAs that may also be bolted to the same cluster upon which the MEMS gyroscope PBAs are bolted. The primary technical benefit of this technique may be the improvement of gyroscope bias performance while maintaining manufacturability and affordability of the overall product by eliminating the need for complex geometries or rare materials. Said differently, it is a technique which may improve gyroscope bias performance while opening up the design space to ensure cost targets are met.

In examples, the MEMS gyroscope's primary mounting structure and any additional component on the isolated side (such as the inside) of the isolator's elastomer (such as the isolator's inner metal) is designed such that no modes are present below the gyroscope frequency. In examples, a structural epoxy (such as epoxy film, liquid epoxy, or some other adhesive) or other permanent weld is used to rigidly connect the component to the mounting structure before or after the final fastener torque. In examples, structural epoxy, liquid epoxy, or other adhesive is applied between the component and the mounting structure and then mechanical fasteners are tightened between the component and the mounting structure to result in more rigid connection between the component and the mounting structure. In examples, mechanical fasteners are tightened between the component and the mounting structure and then the component is welded to the mounting structure to result in more rigid connection between the component and the mounting structure. In examples, two isolators are fastened (such as by bolts, screws, or other fasteners) to a sensor block, with a structural epoxy film applied prior to fastener installation. In examples, this technique is also used for the bolted joint between other PBAs and the block, a single ring isolator and the block, or any other variation described herein.

As used herein, "rigid connection", "rigidly connected", "rigidly connect", "rigid mechanical connection", and the like mean inflexible connection designed to minimize, prohibit, and/or eliminate movement between elements connected together. In contrast, "non-rigid connection" (such as "elastic connection", "flexible connection", etc. from elastic material, etc.) is designed to allow movement between elements connected together to provide isolation and/or to avoid transfer of stress from one component to another (such as adhesive stress transmitted to MEMS). In some cases, mechanical fasteners and adhesives may be flexible and allow movement between elements connected together. In examples, it is desirable to have non-rigid connection (such as elastic connection or flexible connection) between particular elements to provide isolation. In examples, it is desirable to have rigid connection between particular elements. In examples, it is desirable to have non-rigid connection between some particular elements (to provide isolation) while still having rigid connection between some particular elements.

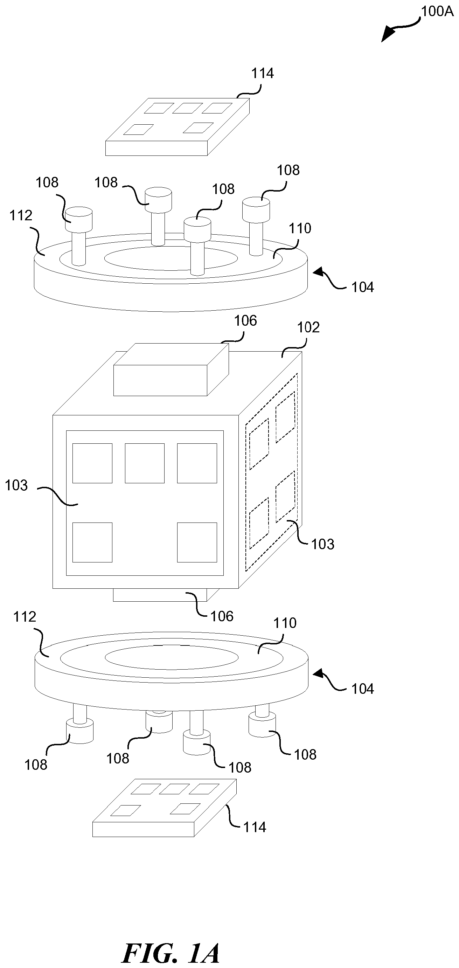

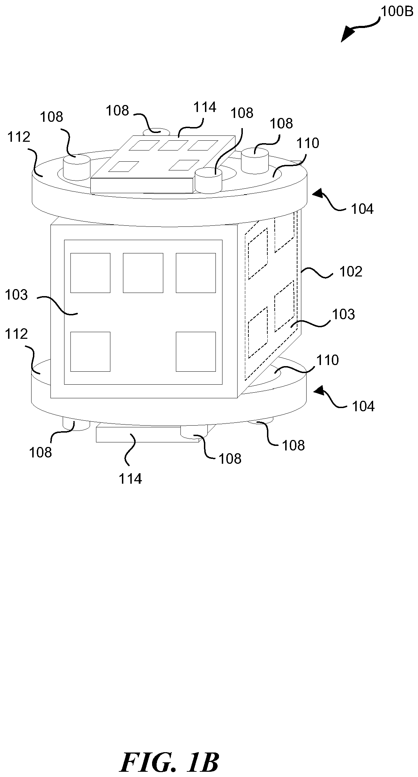

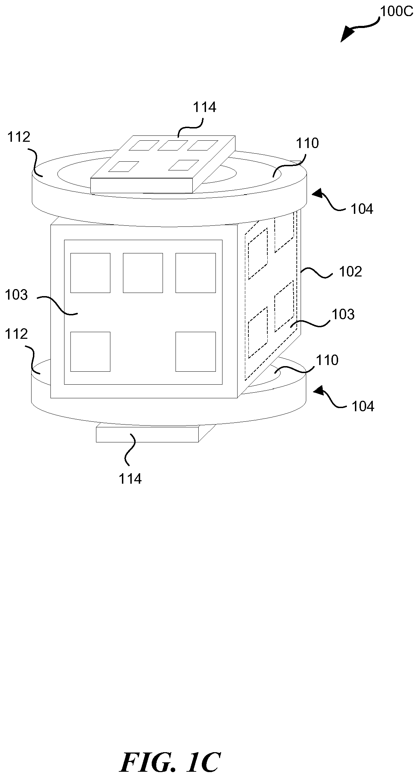

Figures 1A-1C is a block diagram illustrating an example sensor block assembly 100 at different stages of assembly, the example system including an isolator rigidly connected to a sensor block with adhesive, epoxy, and/or welding for natural frequency suppression for improved sensor performance. Figure 1A is a block diagram illustrating the example sensor block assembly 100 before assembly. Figure 1B is a block diagram illustrating the example sensor block assembly 100 after assembly. Figure 1C is a block diagram illustrating the example sensor block assembly 100 in embodiments where (1) screws and/or bolts are not used or (2) any screws and/or bolts have been removed after the joint has been welded. In examples, the example system can be implemented onboard or coupled to a vehicle, held by a person, etc. Use of the term "vehicle" is not intended to be limiting and includes all classes of vehicles falling within the ordinary meaning of the term. This would include but not limited to, aerial traversing vehicles (e.g., commercial, non-commercial, or recreational aircraft), unmanned and/or space traversing vehicles (e.g., satellites, urban air mobility vehicles), water traversing vehicles (e.g., ships, submarines), and land traversing vehicles (e.g., automobiles including cars, trucks, motorcycles). Throughout the disclosure, the vehicle may be described as an aircraft with the understanding that the principles described herein apply to other vehicles where applicable.

In examples, the example sensor block assembly 100 includes at least one sensor block 102 (having circuit boards and/or circuit cards 103 and also referred to as a cluster) and at least one isolator 104 (such as a ring isolator or, four point mount, or eight point mount isolators). In examples, the circuit boards and/or circuit cards 103 include Printed Circuit Boards (PCBs). In examples, the at least one sensor block 102 includes at least one circuit board and/or circuit card 103 on multiple faces (such as 2, 3, 4, 5, or 6 faces) of the at least one sensor block 102. In examples, the at least one sensor block 102 includes a single circuit board and/or circuit card 103 on a single face. In examples, the circuit boards and/or circuit cards 103 are connected together into an assembly.

In examples, the at least one sensor block 102 is rigidly connected to the at least one isolator 104 through at least one of adhesive and/or epoxy 106 (and/or welding) to mitigate or eliminate any frequencies that may be passed from outside of the sensor block assembly 100 to the at least one sensor block 102. In examples, these frequencies could negatively impact sensing by sensors on the sensor block 102. In examples, the at least one sensor block 102 is also connected to the at least one isolator 104 using at least one mechanical fastener 108 (such as a screw or bolt). In examples, the use of adhesive and/or epoxy 106 and/or welding stiffens up the joint from how stiff it would be were only the mechanical fastener 108 (such as a screw or bolt) used. In examples, the at least one mechanical fastener 108 (such as a screw or bolt) is only temporarily used during assembly until the curing of the adhesive and/or epoxy 106 and/or welding is complete to get a more rigid connection between the at least one sensor block 102 and the at least one isolator 104 and the at least one mechanical fastener 108 is removed after the curing and/or welding is complete.

In examples, the at least one isolator 104 includes an inner metal 110 where the adhesive and/or epoxy 106 (and/or welding) and the at least one mechanical fastener 108 are positioned to connect the at least one sensor block 102 and the at least one isolator 104. In examples, the at least one isolator 104 includes an outer metal and elastomer 112. In examples, the combination of the inner metal 110 and the outer metal and elastomer 112 provide the isolation between the at least one sensor block 102 and the chassis (broader surrounding/mounting structure) in which the example sensor block assembly 100 is positioned because the outer metal and elastomer 112 isolate between the inner metal 110 and the chassis (broader surrounding/mounting structure) in which the example sensor block assembly 100 is positioned. In examples, additional component(s) 114 (such as additional circuit boards and/or cards 103) can be mounted to the inner metal 110 for isolation using adhesive and/or epoxy 106 (and/or welding). In examples, movement between the at least one isolator 104 and the at least one sensor block 102 is minimized because the at least one isolator 104 is rigidly connected to the at least one sensor block 102 through the adhesive and/or epoxy 106 (and/or welding).

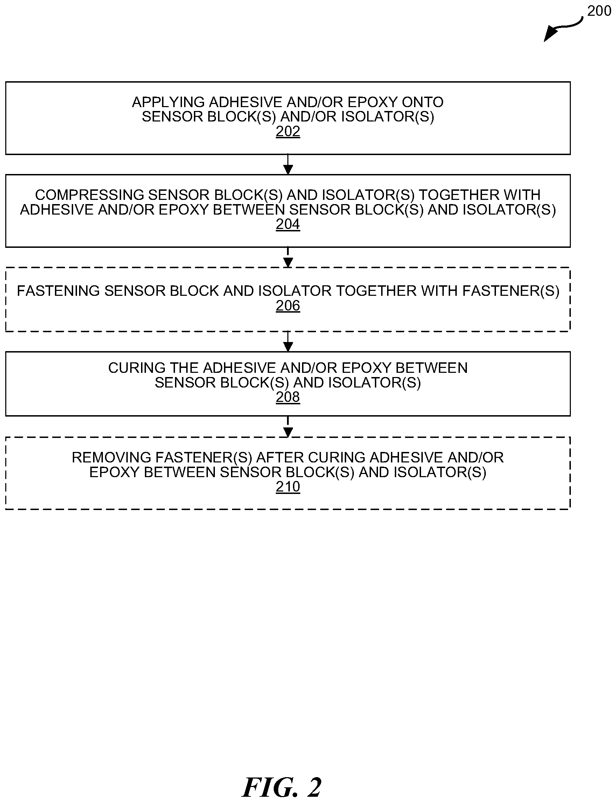

Figure 2 is an example method 200 for assembling a sensor block assembly using adhesive and/or epoxy for natural frequency suppression for improved sensor performance. In examples, method 200 begins at block 202 with applying at least one of adhesive or epoxy onto at least one of at least one sensor block or at least one isolator. In examples, method 200 proceeds with block 204 with compressing the at least one sensor block and the at least one isolator together with the at least one of the adhesive or the epoxy between the at least one sensor block and the at least one isolator, wherein the at least one of the adhesive or the epoxy forms at least one rigid mechanical connection between the at least one sensor block and the at least one isolator. In examples, method 200 proceeds with optional block 206 with fastening the at least one sensor block and the at least one isolator together with the at least one fastener. In examples, the at least one fastener includes at least one of a screw or a bolt. In examples, method 200 proceeds with block 208 with curing the adhesive and/or epoxy between the at least one sensor block and the at least one isolator to form the at least one rigid mechanical connection between the at least one sensor block and the at least one isolator. In examples, method 200 proceeds with optional block 210 with removing the at least one fastener. In examples, movement between the at least one isolator and the at least one sensor block is minimized because the at least one isolator is rigidly connected to the at least one sensor block through the adhesive and/or epoxy.

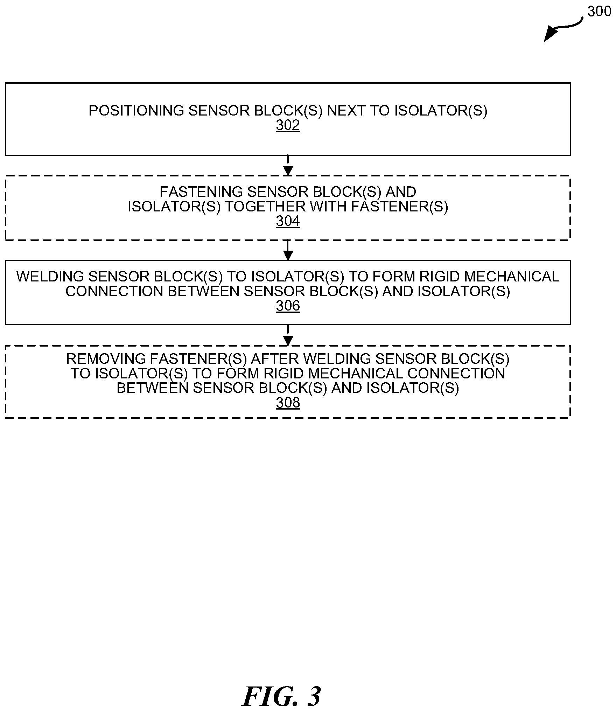

Figure 3 is an example method 300 for assembling a sensor block assembly using welding for natural frequency suppression for improved sensor performance. In examples, method 300 begins at block 302 with positioning at least one sensor block next to at least one isolator. In examples, method 300 proceeds with optional block 304 with fastening the at least one sensor block and the at least one isolator together with at least one fastener. In examples, the at least one fastener includes at least one of a screw or a bolt. In examples, method 300 proceeds with block 306 with welding the at least one sensor block to the at least one isolator to form at least one rigid mechanical connection between the at least one sensor block and the at least one isolator. In examples, method 300 proceeds with optional block 308 with removing fastener(s) after welding the at least one sensor block to the at least one isolator to form the rigid mechanical connection between the at least one sensor block and the at least one isolator. In examples, movement between the at least one isolator and the at least one sensor block is minimized because the at least one isolator is rigidly connected to the at least one sensor block through the welding.

While detailed descriptions of one or more embodiments of the disclosure have been given above, various alternatives, modifications, and equivalents will be apparent to those skilled in the art without varying from the spirit of the disclosure. For example, while the embodiments described above refer to particular features, the scope of this disclosure also includes embodiments having different combinations of features and embodiments that do not include all of the described features. Accordingly, the scope of the present disclosure is intended to embrace all such alternatives, modifications, and variations as fall within the scope of the claims, together with all equivalents thereof. Therefore, the above description should not be taken as limiting.

### Examples

Example 1 includes a sensor block assembly, comprising: at least one sensor block; and at least one isolator rigidly connected to the at least one sensor block through at least one of adhesive, epoxy, or welding.

Example 2 includes the sensor block assembly of Example 1, wherein the at least one isolator is further connected to the at least one sensor block through at least one fastener.

Example 3 includes the sensor block assembly of Example 2, wherein the at least one fastener includes at least one of a screw or a bolt.

Example 4 includes the sensor block assembly of any of Examples 1-3, wherein the at least one isolator includes a plurality of isolators.

Example 5 includes the sensor block assembly of any of Examples 1-4, wherein the at least one sensor block includes at least one circuit board on at least one face.

Example 6 includes the sensor block assembly of any of Examples 1-5, wherein movement between the at least one isolator and the at least one sensor block is minimized because the at least one isolator is rigidly connected to the at least one sensor block through the at least one of adhesive, epoxy, or welding.

Example 7 includes a method of assembling a sensor block assembly, comprising: applying at least one of adhesive or epoxy onto at least one of at least one sensor block or at least one isolator; and compressing the at least one sensor block and the at least one isolator together with the at least one of the adhesive or the epoxy between the at least one sensor block and the at least one isolator, wherein the at least one of the adhesive or the epoxy forms at least one rigid mechanical connection between the at least one sensor block and the at least one isolator.

Example 8 includes the method of Example 7, further comprising: curing the at least one of the adhesive or the epoxy between the at least one sensor block and the at least one isolator to form the at least one rigid mechanical connection between the at least one sensor block and the at least one isolator.

Example 9 includes the method of any of Examples 7-8, further comprising: fastening the at least one sensor block and the at least one isolator together with at least one fastener.

Example 10 includes the method of Example 9, wherein the at least one fastener includes at least one of a screw or a bolt.

Example 11 includes the method of any of Examples 9-10, further comprising: curing the at least one of the adhesive or the epoxy between the at least one sensor block and the at least one isolator to form the at least one rigid mechanical connection between the at least one sensor block and the at least one isolator.

Example 12 includes the method of Example 11, further comprising: removing the at least one fastener after curing the at least one of the adhesive or the epoxy between the at least one sensor block and the at least one isolator.

Example 13 includes the method of any of Examples 7-12, wherein the at least one isolator includes a plurality of isolators.

Example 14 includes the method of any of Examples 7-13, wherein movement between the at least one isolator and the at least one sensor block is minimized because of the at least one rigid mechanical connection between the at least one sensor block and the at least one isolator.

Example 15 includes a method of assembling a sensor block assembly, comprising: positioning at least one sensor block next to at least one isolator; and welding the at least one sensor block to the at least one isolator to form at least one rigid mechanical connection between the at least one sensor block and the at least one isolator.

Example 16 includes the method of Example 15, further comprising: fastening the at least one sensor block and the at least one isolator together with at least one fastener prior to welding the at least one sensor block to the at least one isolator.

Example 17 includes the method of Example 16, wherein the at least one fastener includes at least one of a screw or a bolt.

Example 18 includes the method of Example 17, further comprising: removing the at least one fastener after welding the at least one sensor block to the at least one isolator.

Example 19 includes the method of any of Examples 15-18, wherein the at least one isolator includes a plurality of isolators.

Example 20 includes the method of any of Examples 15-19, wherein movement between the at least one isolator and the at least one sensor block is minimized because of the at least one rigid mechanical connection between the at least one sensor block and the at least one isolator.

## Claims

1. A sensor block assembly, comprising:
at least one sensor block; and
at least one isolator rigidly connected to the at least one sensor block through at least one of adhesive, epoxy, or welding.

2. The sensor block assembly of claim 1, wherein the at least one sensor block includes at least one circuit board on at least one face.

3. The sensor block assembly of claim 1, wherein movement between the at least one isolator and the at least one sensor block is minimized because the at least one isolator is rigidly connected to the at least one sensor block through the at least one of adhesive, epoxy, or welding.

4. A method of assembling a sensor block assembly, comprising:
applying at least one of adhesive or epoxy onto at least one of at least one sensor block or at least one isolator; and
compressing the at least one sensor block and the at least one isolator together with the at least one of the adhesive or the epoxy between the at least one sensor block and the at least one isolator, wherein the at least one of the adhesive or the epoxy forms at least one rigid mechanical connection between the at least one sensor block and the at least one isolator.

5. The method of claim 4, further comprising:
curing the at least one of the adhesive or the epoxy between the at least one sensor block and the at least one isolator to form the at least one rigid mechanical connection between the at least one sensor block and the at least one isolator.

6. The method of claim 4, further comprising:
fastening the at least one sensor block and the at least one isolator together with at least one fastener.

7. The method of claim 4, wherein movement between the at least one isolator and the at least one sensor block is minimized because of the at least one rigid mechanical connection between the at least one sensor block and the at least one isolator.

8. A method of assembling a sensor block assembly, comprising:
positioning at least one sensor block next to at least one isolator; and
welding the at least one sensor block to the at least one isolator to form at least one rigid mechanical connection between the at least one sensor block and the at least one isolator.

9. The method of claim 8, further comprising:
fastening the at least one sensor block and the at least one isolator together with at least one fastener prior to welding the at least one sensor block to the at least one isolator.

10. The method of claim 8, wherein movement between the at least one isolator and the at least one sensor block is minimized because of the at least one rigid mechanical connection between the at least one sensor block and the at least one isolator.
